# EUROPEAN PATENT APPLICATION

(11) **EP 2 047 749 A2**
(43) Date of publication of application: **15.04.2009**
(21) Application number: 08380285.0
(22) Date of filing: 07.10.2008
(51) Int. Cl.: A01N 31/08, A01N 31/16, A01N 35/02, A01N 35/04, A01N 37/40, A01N 65/22, A01N 65/28, A01N 65/24, A01N 65/03, A01P 3/00

(54) **Compositions of natural origin for treating physiopathies and diseases caused by postharvest fruit and vegetable pathogens and their method of application**

(30) Priority: 08.10.2007 ES 200702638
(71) Applicant: Timac Agro España, S.A., 31160 Orcoyen, Navarra (ES)
(72) Inventor: Garcia-Mina Freire, Jose, M., 31160 Orcoyen Navarra (ES); Casanova, Esther, 31160 Orcoyen Navarra (ES); Garcia Cantera, Rodrigo, 31160 Orcoyen Navarra (ES); Yvin, Jean, Claude, 31160 Orcoyen Navarra (ES)
(74) Representative: Garcia-Cabrerizo y del Santo, Pedro Maria

(57) **Abstract**

Compositions of natural origin for treating physiopathies and diseases caused by postharvest fruit and vegetable pathogens, and a method for their application, whereby the compositions contain as a main active principle a mixture of timol, eugenol and cinnamaldehyde and as a secondary active principle a mixture of cuminaldehyde, geraniol, vanillin, borneol, menthol, acetol, terpineol, limonene, and glycosides of the essences of mustard and jasmine, whereto an essence or extract containing salicylic acid is added or certain derivatives of the latter (esters or amides), a tensioactive that is acceptable by food standards, oligosaccharides of different natural origin and other ingredients such as chitosan, phosphorous acid (or its salts), or phytosanitary products, pesticides or synthetic antioxidants. The method of application of these compositions consists of including them in the washes or waxes usually employed in the postharvest treatment of fruit and vegetables.

## Description

### Background of the invention

The use of efficient and natural products, without residues, for controlling diseases and physiopathies in fruits and vegetables is very important. A previous patent (EP1106070A2/US6482455) discloses the use of products containing essential plant oils with fungicidal, bactericidal and antioxidant effects. These formulations comprise thyme, clove and cinnamon as main essences and in a secondary fashion other essences with less intensive effects. However this product, although efficient, is problematic for commercial use because its effects are inferior to those of synthesised products when the pressure of the pathogen or of the physiopathy is heavily pronounced.

This new patent of invention represents a fundamental improvement on the previous patent. Thus, it describes the simultaneous use of one or several of the vegetable essences disclosed in the previous patent with salicylic acid, or a vegetable extract containing salicylic acid or its derivatives (esters or amides). The synergy of this new composition ensures that diseases are treated even when the pressure of the pathogen is high. It is important to mention that only the simultaneous use of both product families allows the pathology to be controlled: thus the exclusive use of salicylic acid or derivatives (esters or/and amides) will not treat the disease effectively, and neither will the exclusive use of a composition of the families disclosed in patent (EP1106070A2/US6482455) allow the disease to be controlled. However, the simultaneous use of both products, as disclosed and claimed in the present invention, allows the disease to be treated effectively.

### Description of the invention:

The present invention contemplates formulations comprising simultaneously:
a) One or several vegetable essences containing timol or carvacrol or eugenol or isoeugenol or cinnamaldehyde; or these pure active principles. One of these vegetable essences or the mixture of several can be complemented with essences containing cuminaldehyde, geraniol, vanillin, borneol, menthol, acetol, terpineol, limonene and glycosides contained in mustard and jasmine; or the pure active principles, and
b) One or several vegetable essences or extracts containing salicylic acid or its derivatives (esters and/or amides), or these pure active principles.

This formulation can be presented as a mixture of the pure active principles or as mixtures containing a tensioactive agent to facilitate their dispersion in water. This product can be any cationic, anionic or non-ionic surfactant or tensioactive agent of the families accepted as food additives, although the preferred option is one of the Tween family, such as Tween 80.

The final composition can be applied:
a) In liquid form in the postharvest wash of fruits and vegetables, or
b) In solid form included in waxes or other postharvest products.

The dose of the final product may be any, but the preferred interval is between 100 mg l⁻¹ and 5% in weight in the medium of application (wash or wax).

The products can be prepared by:
a) Mixing liquids and solids in a reactor with stirring at room temperature and at atmospheric pressure. In any case, it is advisable for the temperature of the mixture to be less than 35°C, or
b) Mixing solids or liquids with waxes in a worm mixer or a kneading machine. It is advisable to work at the minimum temperature for the wax to be appropriately treated.

This composition can be mixed with other products such as, for example, oligosaccharides of different origin or natural extracts containing them (yeasts, marine algae, etc.), chitosan, phosphorous acid or its salts, phytosanitary products, pesticides or synthesised antioxidants.

### Preferred embodiments. Composition examples:

### Example 1:

A reactor with stirring at room temperature and at atmospheric pressure is used to mix:
1. 50 g of timol
2. 50 g of carvacrol
3. 200 g of eugenol
4. 200 g of cinnamaldehyde
5. 1 g of salicylic acid
6. 10 g of mannan-oligosaccharides
7. 489 g of Tween 80

The order of manufacture would be:
a) Mix ingredients 1-4 and 7.
b) Add ingredient 5 until its full suspension/dissolution.
c) Add component 6 until its full suspension/dissolution.

### Example 2:

In a reactor with stirring at room temperature and at atmospheric pressure, mix:
1. 50 g of timol
2. 50 g of carvacrol
3. 200 g of eugenol
4. 150 g of cinnamaldehyde
5. 50 g of cuminaldehyde
6. 1 g of salicylic acid
7. 10 g of mannan-oligosaccharides
8. 100 g of acid from the potassium salt of phosphorous acid.
9. 389 g of Tween 80.

The order of manufacture would be:
a) Mix ingredients 1-5 and 9.
b) Add ingredient 6 until its full suspension/dissolution.
c) Add component 7 until its full suspension/dissolution.
d) Add component 8 until its full suspension/dissolution.

### Example 3:

In a reactor with stirring at room temperature and at atmospheric pressure, mix:
1. 50 g of thyme essence
2. 200 g of clove essence
3. 150 g of cinnamon essence
4. 50 g of mint essence
5. 1 g of salicylic acid
6. 10 g of liquid extract of *ascophyllum nodosum.*
7. 489 g of Tween 80

The order of manufacture would be:
a) Mix ingredients 1-5 and 9, and
b) Add ingredient 5 until its full suspension/dissolution.

### Preferred embodiments. Study of their effectiveness:

The purpose of this study was to research the effectiveness of a product according to the previous patent (EP1106070A2/US6482455) and of a product according to the present invention in order to control the disease caused by a pathogen in an apple, where the pathogen was in conditions of high pressure (direct infection on a cut with a high concentration of the pathogen).

The selected vegetable medium was the peel of an apple (Fuji variety) and the selected pathogen was *penicillium expansum.*

The selected defence system indicator was PAL enzyme activity.

Three products were used for the comparative test: Tebefred (a synthesised fungicide), F1 (the formulation according to patent EP1106070A2/US6482455, based exclusively on plant essences) and NP (the new formulation, which according to the invention described and claimed herein is based on the same vegetable essences as F1 and the new components of example 2).

The study looked at:
a) The effect on the fruit's defence system:
   In order to find out the effect of the different products on the fruit's defence system, PAL activity was evaluated using a system like the one used in experiments for evaluating control of the disease.
b) The effect on controlling the disease.
   In order to determine the real effect of the different products on controlling the disease in vivo, the growth of rot caused by the fungus in infected apples treated and untreated with the different products was analysed.

Results and discussion:

Effect on the defence system:

Action of the active principles contained in the products Tebefred, F1 and NP on activating the vegetable tissue's defence system.

Measurement of PAL activity

These measurements were taken from healthy and infected vegetable tissues.

Methodology:

The concentration of the phenylalanine ammonia lyase (PAL) enzyme was evaluated. The measurements were taken from both the exocarp (peel, at 3 mm) and the mesocarp (fleshy part close to the peel, at 7 mm).

The doses were as follows:

| **Treatment** | **Dose** |
|---|---|
| Control with water | - |
| Tebefred | 0.3% |
| NP | 0.5% |
| F1 | 0.5% |

Results on the exocarp:
The results obtained are presented in Table 1, which shows the average values for each treatment. Each value reflects the average of 3 extractions per treatment. Each value is expressed in milligrams of trans-cinamic acid per gram of fresh weight.

**Table 1.**

| **Treatment** | **Uninfected** | **Infected** |
|---|---|---|
| Control with water | 0.079 | 0.087 |
| Tebefred | 0.075 | 0.116 |
| NP | 0.090 | 0.159 |
| F1 | 0.092 | 0.127 |

Results on the mesocarp:
The results are shown in table 2, corresponding to the average values for each treatment. Each value reflects the average of 3 extractions per treatment. Each value is expressed in milligrams of trans-cinamic acid per gram of fresh weight.

**Table 2**

| **Treatment** | **Uninfected** | **Infected** |
|---|---|---|
| Control with water | 0.081 | 0.113 |
| Tebefred | 0.059 | 0.116 |
| NP | 0.057 | 0.174 |
| F1 | 0.083 | 0.117 |

Table 3 indicates the values for the sum in PAL activity of the exocarp and the mesocarp.

**Table 3.**

| **Treatment** | **Uninfected** | **Infected** |
|---|---|---|
| Control with water | 0.159 | 0.199 (100) |
| Tebefred | 0.133 | 0.232 (116) |
| NP | 0.146 | 0.333 (167)* |
| F1 | 0.175 | 0.245 (123) |

| | | |
|---|---|---|
| **(*significant, p<0.05)** | | |

Conclusion:
As we can see from the results, taking the exocarp and the mesocarp into account together, whereas Tebefred and F1 show a slight increase in the PAL activity over the control, in conditions of infection (between 16 and 23%); the NP product caused a very significant increase in this activity, which was 67.4% over the control (significant in relation to the control p = 0.046) and of 40% over the other products (p = 0.1-0.15). This difference is particularly noticeable on the mesocarp, where NF caused an increase in PAL activity of 54%, whereas the other products presented no effect whatsoever.

Effect of the active principles contained in the products Tebefred, F1 and NF on the disease *Penicillium expansum* on vegetable tissue *in vivo* (apple - peel):

Methodology:
The apples were infected on the same day as the treatment. The apples were injected with a known amount of *penicillium expansum* conidias left to dry for five hours and following this interval of time, treated with the products. Measurements of the growth of the disease were taken on days 6 and 8 following infection.

The doses used were the same as those used to evaluate PAL activity:

| **Treatment** | **Dose** |
|---|---|
| Control with water | - |
| Tebefred | 0.3% |
| NF | 0.5% |
| F1 | 0.5% |

Results:
Table 4 shows the results obtained, representing the average values in mm of the rot caused by the progress of the fungus. The values with different letters differ significantly for a p<0.05 following an LSD statistical analysis.

**Table 4.**

| **Treatment** | **6 days** | **8 days** |
|---|---|---|
| Control with water | 14.69 c | 20.97 c |
| Tebefred | 0.00 a | 0.00 a |
| NP | 0.47 a | 4.17b |
| F1 | 13.69 b | 21.14 c |

Table 5 shows the values corresponding to the increases in growth of the different treatments in relation to the control treatment expressed as a % (the absolute value corresponds to the % of inhibition).

| **Treatment** | **6 days** | **8 days** |
|---|---|---|
| Tebefred | -100 | -100 |
| NF | -96.8 | -80.1 |
| F1 | -6.8 | 0.8 |

Final conclusion:
As a final conclusion, this study shows how in conditions of high pressure of the pathogen (direct infection with a high concentration of spores) the formulations containing only the vegetable essences (EP1106070A2/US6482455) are not capable of controlling the pathology, whereas the formulation according to the present invention has a very significant effect.

### Other technical considerations:

The formulations inherent to this invention can be presented as a mixture of the pure active principles or as mixtures containing a tensioactive product to facilitate their dispersion in water. This tensioactive may be any cationic, anionic or non-ionic surfactant or tensioactive agent of the families accepted as food additives, although the preferred one is one of the Tween family, such as Tween 80, for example.

The corresponding compositions can be applied: in liquid form during the postharvest wash of the fruit and vegetables, or in solid form included in waxes or in other products designed for treating the respective harvests. The dose of the final product may be any but the preferred interval is between 100 mg l⁻¹ and 5% in weight with respect to the means of application (wash or wax).

The products can be prepared by mixing liquids and solids in a reactor with stirring at room temperature and at atmospheric pressure (in any case, it is advisable for the temperature of the mix to be less than 35°C), or by mixing solids or liquids with waxes in a worm mixer or kneading machine (in any case, it is advisable to work at the minimum temperature that allows the waxes to be suitably processed).

These compositions can be mixed with other products such as oligosaccharides of different origin (or the natural extracts that contain them: yeasts, marine algae, etc.,) chitosan, phosphorous acid or its salts, or phytosanitary products, pesticides or synthesised antioxidants.

## Claims

1. Compositions of natural origin for treating physiopathies and diseases caused by postharvest fruit and vegetable pathogens, **characterised in that** they comprise:
a) One or several vegetable essences containing timol, carvacrol, eugenol, isoeugenol or cinnamaldehyde, or these pure active principles. One of these vegetables essences or the mixture of several may be complemented with essences containing cuminaldehyde, geraniol, vanillin, borneol, menthol, acetol, terpineol, limonene and glycosides contained in mustard and jasmine, or its pure active principles, and
b) One or several essences or vegetable extracts containing salicylic acid or its derivatives in the form of esters and/or amides; or these pure active principles.

2. Compositions of natural origin for treating physiopathies and diseases caused by postharvest fruit and vegetable pathogens according to claim 1, **characterised in that** the above formulations can be presented as a mixture of the pure active principles or as mixtures containing a tensioactive product to facilitate their dispersion in water. This tensioactive may be any cationic, anionic or non-ionic surfactant or tensioactive agent of the families accepted as food additives, preferably of the Tween type, such as Tween 80.

3. Compositions of natural origin for treating physiopathies and diseases caused by postharvest fruit and vegetable pathogens according to claims 1 and 2, **characterised in that** the products can be prepared by:
a) Mixing liquids and solids in a reactor with stirring at room temperature and at atmospheric pressure, and in any case, with a temperature mix of less than 35°C, or
b) Mixing solids or liquids with waxes in a worm gear mixer or kneading machine, working at the minimum temperature that allows the wax to be treated properly,
it is provided that these compositions may be mixed with other products such as oligosaccharides of different origin (or the natural extracts that contain them: yeasts, marine algae, etc.), chitosan, phosphorous acid or its salts, phytosanitary products, pesticides or synthesised antioxidants.

4. A method for applying the final compositions, according to the preceding claims, **characterised in that** it has two possible forms of administration:
a) In liquid form in the wash following the harvesting of the fruit and vegetables.
b) In solid form included in waxes or other postharvest products; with the dose of the final compositions being in the intervals between 100 mg l⁻¹ and 5% in weight with respect to the means of application (wash or waxes) used for the corresponding treatments.
